# EUROPEAN PATENT SPECIFICATION

(11) **EP 0 707 954 B1**
(45) Date of publication and mention of the grant of the patent: **14.11.2001**
(21) Application number: 95202621.9
(22) Date of filing: 29.09.1995
(51) Int. Cl.: B32B 27/08, B65D 65/40

(54) **Multilayer heat-shrinkable films**
Heissschrumpfbare Mehrschichtfolien
Feuilles multicouches thermorétractables

(30) Priority: 19.10.1994 EP 94203035
(43) Date of publication of application: 24.04.1996
(73) Proprietor: Cryovac, Inc., Duncan, S.C. 29334-0464 (US)
(72) Inventor: Paleari, Mario, I-20010 Pogliano Milanese (Milano) (IT); Fornasiero, Tito, I-20017 Rho (Milano) (IT)
(74) Representative: Marchi, Massimo, Dr.

(56) References cited:
- EP-A- 0 229 715
- EP-A- 0 285 444
- EP-A- 0 577 432
- GB-A- 2 115 348
- GB-A- 2 135 239
- US-A- 4 247 584
- US-A- 4 424 243
- US-A- 5 037 683
- MICHAEL AND IRENE ASH 'Handbook of Plastic Compounds, Elastomers, and Resins' 1992 , VCH PUBLISHERS, INC. , NEW YORK * page 117 *

## Description

The present invention relates generally to thermoplastic, heat-shrinkable, packaging films and more particularly to a multilayer heat-shrinkable film with high shrink, good optical properties and improved mechanical properties particularly suitable for packaging food products.

Heat-shrinkable thermoplastic films have found many useful applications in the packaging industry for food (meat, cheeses, poultry, etc.) and non-food products.

In general terms, the packaging of food and non-food items by means of a heat-shrinkable thermoplastic film comprises configuring the heat-shrinkable packaging material, either partially or completely, around a product (e.g. by placing the article within a bag fabricated from the film), removing excess air from inside the package (e.g. vacuumizing the bag), sealing it and thereafter exposing the package to a heat source thereby causing the heat-shrinkable film to shrink and conform with the contours of the packaged item.

These films should provide to the packaged items an attractive appearance and in the mean time have good mechanical properties which would guarantee that the packaged product would be protected from the environment.

The attractive appearance is mainly dependent on the optics and on the shrink properties of the film.

As a matter of fact the transparency, clarity and glossiness of the film do contribute to the aesthetic consumer appeal of products packaged therein. Good optical properties also permit adequate inspection of the packaged product during the distribution cycle and by the end user at the point of purchase.

The shrink properties which depend on the shrink characteristics of the materials used and are imparted to the film by the process used for its manufacture also contribute to the attractive package appearance providing a tight, smooth appearance to the packaged article. Processes useful for the manufacture of films for food contact applications involve an orientation step carried out by heating the cast material at a temperature that is below the melting temperature of at least one polymer present in the film, such temperature being generally below 100°C, and preferably between 80 and 95°C. Once used in packaging, the thus obtained film, heated to a temperature close to its orientation temperature, will shrink back to its original unoriented dimension.

Further desirable properties, particularly in case of a film to be used for packaging of rigid and tough articles, such as frozen food, both in case the food is packaged in the fresh state and then frozen and in case the food is packaged directly in the frozen state, are high mechanical properties which are required to avoid that the article packaged, which may often have projections, might puncture and damage the film. Furthermore, owing to the longer shelf-life of the frozen foods, their distribution chain do often comprise more steps than for fresh foods which have a limited shelf-life and therefore the packaging material needs to be strong enough to survive the handling involved in these several steps.

### SUMMARY OF THE INVENTION

The present invention provides a multilayer film which has very good mechanical properties such as puncture resistance and abuse resistance, high shrink at low temperature and good optical properties.

Specifically the present invention relates to a multilayer heat-shrinkable film comprising :
- a heat-sealable layer (a);
- an inner layer (b) comprising a polymer selected from the group consisting of ethylene-vinyl acetate copolymers containing from 4 to 28 % by weight of vinyl acetate units and with a fractional Melt Index lower than 1g/10min, and ethylene-alkyl acrylate copolymers containing from 9 to 28 % by weight of alkyl acrylate units and with a fractional Melt Index;
- an inner layer (c), face-to-face in contact with layer (b), comprising a polymer selected from the group consisting of ethylene-acrylic acid copolymers, ethylene-methacrylic acid copolymers, ethylene-vinyl acetate copolymers, ethylene-alkyl acrylate copolymers, heterogeneous ethylene-α-olefin copolymers, and homogeneous ethylene-α-olefin copolymers; and
- an additional layer (d) comprising a polymer selected from the group consisting of ethylene-vinyl acetate copolymers containing from 4 to 28 % by weight of vinyl acetate units and with a fractional Melt Index lower than 1g/10 min, and ethylene-alkyl acrylate copolymers containing from 9 to 28 % by weight of alkyl acrylate units and with a fractional Melt Index; face-to-face in contact with the side of layer (c) which is not in contact with layer (b);
wherein the composition of layer (c) is different from that of layers (b) and (d), and the ratios by weight between layer (b) and layer (c), and between layer (d) and layer (c) are comprised between 0.125 to 8, additional layers including, as an inner layer, an oxygen barrier layer follow layer (d) in the structure sequence.

In a preferred embodiment the present invention relates to a multilayer heat-shrinkable film as above wherein the inner layers (b) and (d), each independently, comprise a polymer selected from ethylene-vinyl acetate copolymers containing from 4 to 28 % by weight of vinyl acetate units and with a fractional Melt Index lower than 1g/10 min

In a more preferred embodiment the present invention refers to a multilayer heat-shrinkable film as above wherein the inner layers (b) and (d), each independently, comprise an ethylene-vinyl acetate copolymer containing from 9 to 19 % by weight of vinyl acetate units and with a fractional Melt Index lower than 1g/10 min, and the inner layer (c), which is face-to-face in contact with layers (b) and (d), comprises a polymer selected from ethylene-acrylic acid copolymers, and ethylene-methacrylic acid copolymers.

Test results show that films according to the present invention have very good shrink, optical and mechanical properties which render them particularly suitable for e.g. packaging of frozen foods. It is to be understood that additional polymeric layers might also be incorporated into the film between the heat-sealing layer (a) and the inner layer (b).

### DETAILED DESCRIPTION

In this specification and the accompanying claims :

The term "film" refers to a flat or tubular flexible structure of thermoplastic material having a thickness up to about 150 µ.

The term "heat-shrinkable" refers to a film which shrinks by at least 15 % of its original dimensions, in at least one of the longitudinal and transverse directions, when heated to 90 °C for 4 seconds. The quantitative determination is carried out according to ASTM D 2732, as set forth in the 1990 Annual Book of ASTM Standards, Vol. 08.02, pp. 368-371.

As used herein, the phrase "longitudinal direction" or "machine direction," herein abbreviated "MD", refers to a direction "along the length" of the film, i.e., in the direction of the film as the film is formed during extrusion and/or coating.

As used herein, the phrase "transverse direction," herein abbreviated "TD," refers to a direction across the film, perpendicular to the machine direction.

The term "fractional Melt Index" refers to a Melt Index lower than 1, wherein the Melt Index is measured according to ASTM D-1238, Condition E, at 190°C and reported as grams per 10 minutes.

As used herein, the phrases "sealing layer", "heat-sealable layer" and "heat sealing layer", refer to an outer film layer, or layers, involved in the sealing of the film to itself, another film layer of the same or another film, and/or another article which is not a film.

As used herein, the phrases "inner layer" and "internal layer" refer to any layer, of a multilayer film, having both of its principal surfaces directly adhered to another layer of the film.

As used herein, the phrase "outer layer" refers to any film layer of film having less than two of its principal surfaces directly adhered to another layer of the film.

As used herein, the phrase "inside layer" refers to the outer layer, of a multilayer film packaging a product, which is closest to the product, relative to the other layers of the multilayer film. "Inside layer" also is used with reference to the innermost layer of a plurality of concentrically arranged layers simultaneously coextruded through an annular die.

As used herein, the phrase "outside layer" refers to the outer layer, of a multilayer film packaging a product, which is furthest from the product relative to the outer layers of the multilayer film. "Outside layer" also is used with reference to the outermost layer of a plurality of concentrically arranged layers simultaneously coextruded through an annular die.

As used herein, the term "adhered" is inclusive of films which are directly adhered to one another using a heat seal or other means, as well as films which are adhered to one another using an adhesive applied between the two films.

As used herein, the phrase "directly adhered," as applied to film layers, is defined as adhesion of the subject film layer to the object film layer, without a tie layer, adhesive, or other layer there between. In such a case, the phrase "face-to-face contact" between the layers directly adhered to is conveniently employed throughout the specification. In contrast, as used herein, the word "between," as applied to a film layer expressed as being between two other specified layers, includes both direct adherence of the subject layer to the two other layers the subject layer is between, as well as including a lack of direct adherence to either or both of the two other layers the subject layer is between (i.e., one or more additional layers can be imposed between the subject layer and one or more of the layers the subject layer is between).

As used herein, the term "homopolymer" is used with reference to a polymer resulting from the polymerization of a single monomer, i.e., a polymer consisting essentially of a single type of repeating unit, while the term "copolymer" refers to polymers formed by the polymerization reaction of at least two different monomers. For example, the term "copolymer" includes the copolymerization reaction product of ethylene and an alpha-olefin, such as 1-hexene. However, the term "copolymer" is also inclusive of, for example, the copolymerization of a mixture of ethylene, 1-butene, 1-hexene, and 1-octene.

The term "polymer" is inclusive of "homopolymers" and "copolymers" as defined above.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts. Heterogeneous polymers are useful in various layers of the film used in the present invention. Although there are a few exceptions (such as TAFMER™ linear homogeneous ethylene/alpha-olefin copolymers produced by Mitsui Petrochemical Corporation, using Ziegler-Natta catalysts), heterogeneous polymers typically contain a relatively wide variety of chain lengths and comonomer percentages.

As used herein, the phrase "homogeneous polymer" refers to polymerization reaction products of relatively narrow molecular weight distribution and relatively narrow composition distribution.

Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysts, rather than using Ziegler-Natta catalysts.

As used herein, the term "polyolefin" refers to any polymerized olefin, which can be linear, branched, cyclic, aliphatic, aromatic, substituted, or unsubstituted. More specifically, included in the term polyolefin are homopolymers of olefin, copolymers of olefin, copolymers of an olefin and a non-olefinic comonomer copolymerizable with the olefin, such as vinyl monomers, modified polymers thereof, and the like. Specific examples include polyethylene homopolymer, polypropylene homopolymer, polybutene, ethylene-α-olefin copolymer, propylene-α-olefin copolymer, butene-α-olefin copolymer, ethylene-vinyl acetate copolymer, ethylene-ethyl acrylate copolymer, ethylene-butyl acrylate copolymer, ethylene-acrylic acid copolymer, ethylene-methacrylic acid copolymer, modified polyolefin resin, ionomer resin, polymethylpentene, etc.

Modified polyolefin resin is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like. It could also be obtained by incorporating, into the olefin homopolymer or copolymer, an unsaturated carboxylic acid, e.g. maleic acid, fumaric acid, or the like, or a derivative thereof such as the anhydride, ester or metal salt or the like.

Examples of said modified polyolefins are graft copolymers of maleic acid or anhydride onto ethylene-vinyl acetate copolymers, graft copolymers of fused ring carboxylic anhydrides onto polyethylene, resin mixtures of these and mixtures with polyethylene or ethylene-α-olefin copolymers.

As used herein, the phrase "ethylene-α-olefin copolymer," is inclusive of a diverse group of polyethylene copolymers. More specifically, this phrase encompasses such heterogeneous materials as linear low density polyethylene (LLDPE), very low and ultra low density polyethylene (VLDPE and ULDPE), as well as homogeneous polymers such as metallocenecatalyzed EXACT™ linear homogeneous ethylene-α-olefin copolymer resins obtainable from the Exxon Chemical Company, of Baytown, Texas, and TAFMER™ linear homogeneous ethylene-α-olefin copolymer resins obtainable from the Mitsui Petrochemical Corporation. Other ethylene-α-olefin copolymers, such as long chain branched homogeneous ethylene-α-olefin copolymers available from The Dow Chemical Company, known as AFFINITY™ resins, are also included as another type of homogeneous ethylene-α-olefin copolymer useful in the present invention.

The term "ethylene-acrylic acid and ethylene-methacrylic acid copolymers" refers to copolymers of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerized therein an alkyl acrylate or methacrylate, such as n-butyl acrylate or methacrylate or isobutyl acrylate or methacrylate. Said copolymer can be in the free acid form as well as in the ionized or partially ionized form wherein the neutralizing cation can be any suitable metal ion, e.g. an alkali metal ion, a zinc ion or other multivalent metal ions; in this latter case the copolymer is also termed "ionomer".

Unless otherwise specifically indicated, as used herein the term "ethylene-vinyl acetate copolymer" or "EVA" is intended to refer to a copolymer formed from ethylene and vinyl acetate monomers wherein the ethylene derived units in the copolymer are present in major amounts; preferably between about 60% and 98% by weight and the vinyl acetate derived units in the copolymer are present in minor amounts, preferably between about 2 % and about 40% by weight. The Melt Index of said copolymers is limited to < 1.0 g/10 min.

As used herein the term "ethylene-alkyl acrylate copolymers" refers to copolymers of ethylene with alkyl acrylates, e.g. methyl acrylate, ethyl acrylate, and butyl acrylate, wherein the ethylene derived units in the copolymer are present in major amounts and the alkyl acrylate derived units in the copolymer are present in minor amounts, preferably between about 2 % and about 28 % by weight.

The term PVDC refers to a vinylidene chloride copolymer wherein a major amount of the copolymer comprises vinylidene chloride and a minor amount of the copolymer comprises one or more unsaturated monomers copolymerizable therewith, typically vinyl chloride, and alkyl acrylates (e.g. methyl acrylate) or to a blend thereof in different proportions. Generally said PVDC will contain plasticisers and/or stabilizers as known in the art.

The term EVOH refers to saponified products of ethylene-vinyl ester copolymers, generally of ethylene-vinyl acetate copolymers, wherein the ethylene content is typically comprised between 20 and 60 % by mole and the degree of saponification is generally higher than 85%, preferably higher than 95 %.

As used herein, the term polyamide is intended to refer to both polyamides and co-polyamides, either aliphatic or aromatic. Suitable polyamides include amorphous polyamides, and those polymers commonly referred to as e.g. nylon 6, nylon 66, nylon 6-66, nylon 610, nylon 12, nylon 69, and nylon 6-12, as well as to any blend thereof.

For the purposes of the present invention the term polyesters also includes co-polyesters, and polyether/polyesters (i.e. block co-polymers), such as those products obtained by copolymerisation of typically aromatic di-carboxylic acids, such as isophthalic acid and, preferably, terephthalic acid, with one or more glycols, such as ethylene glycol, butylene glycol, and cyclohexanedimethanol.

In the films according to the present invention the heat-sealable layer (a) may be any conventional heat-sealable layer. Such a layer may for example comprise VLDPE (heterogeneous ethylene-(C₄-C₈)-α-olefin copolymer having a density ≤ 0.915 g/cm³), LLDPE (heterogeneous ethylene-(C₄-C₈)-α-olefin copolymer having a density > 0.915 g/cm³), single-site or metallocene-catalysed homogeneous ethylene-α-olefin copolymer (i.e. ethylene-(C₄-C₈)-α-olefin copolymer characterized by a narrow composition distribution and a narrow molecular weight distribution and by the method of manufacture which involves the use of a homogeneous so-called metallocene or single-site catalyst), an ethylene-propylene copolymer, an ethylene-propylene-butylene copolymer, an ethylene-acrylic or methacrylic acid copolymer including an ionomer, and the like. Blends of polymers with good heat-sealing properties can also be used.

In a preferred embodiment the heat-sealable layer (a) will comprise VLDPE or a single-site ethylene-α-olefin copolymer such as those described for example in WO 93/03093, US-A-5,206,075, US-A-5,241,031, WO 90/03414, US-A-5,272,236, and US-A-5,278,272.

When layers (b) and/or (d) comprise an ethylene-vinyl acetate copolymer, preferably the amount by weight of the vinyl acetate units is comprised between 4 to 28 %, more preferably between 9 and 19 %, and even more preferably between 11 and 15 %. The fractional Melt Index is preferably < 0.5, more preferably < 0.40, and most preferably ≤ 0.35.

The ethylene-alkyl acrylate copolymers of layers (b) and (d), are preferably ethylene-methyl acrylate copolymers containing from 9 to 28 % by weight of methyl acrylate units, or ethylene-butyl acrylate copolymers containing from 9 to 24 % by weight of butyl acrylate units. The fractional Melt Index of said ethylene-alkyl acrylate copolymers is preferably < 0.7 and more preferably < 0.50.

The ethylene-vinyl acetate or ethylene-alkyl acrylate copolymers of layers (b) and (d) may be equal or different, provided they both contain an amount by weight of vinyl acetate and/or alkyl acrylate units, respectively, in the above ranges and have a fractional Melt Index lower than 1g/10 min.

Preferred ethylene-acrylic acid and ethylene-methacrylic acid copolymers for inner layer (c) will contain at least 8 % by weight of acrylic or methacrylic acid units and more preferably from about 10 to about 14 % by weight.

Preferred ethylene-vinyl acetate and ethylene-alkyl acrylate copolymers for layer (c) will contain an amount of vinyl acetate and alkyl acrylate derived units higher than 18 %.

For use in layer (c), heterogeneous ethylene-α-olefin copolymers will preferably have a density higher than 0.905 g/cm³ and more preferably higher than 0.912 g/cm³, while homogeneous ethylene-α-olefin copolymers will preferably have a density higher than 0.900 g/cm³ and more preferably higher than 0.905 g/cm³.

For use in inner layer (c), the polymers will preferably have a Melt Index not higher than 3.0 g/10 min, more preferably not higher than 2.0 g/10 min, and even more preferably not higher than 1.0 g/10 min.

The ratios by weight between layers (b) and (c) and between layers (d) and (c), which - as indicated above - may be in the range 0.125 to 8, in a preferred aspect are in the range 0.25 to 4, and in a most preferred aspect are in the range 0.5 to 2. For the safe of clarity said ratios need not to be the same and the ratio by weight between layers (b) and (c) may be different from the ratio by weight between layers (d) and (c).

In a preferred embodiment of the present invention, layer (a) is in contact face-to-face with layer (b) .

The additional layers that follow layer (d) in the structure sequence, include, typically as an inner layer in the multilayer structure, an oxygen barrier layer. The oxygen barrier layers may be made of any of the known barrier polymeric resins, such as PVDC, EVOH, PVOH, PA, etc..

When a high oxygen barrier layer is required, preferably said barrier layer is PVDC or EVOH. The EVOH can be employed as such or blended with other EVOH's or with one or more polyamides.

When a medium oxygen barrier layer or a selective CO₂/O₂ barrier layer is required, a polyamide, a blend of different polyamides or a blend of one or more polyamides with EVOH, can suitably be employed.

The resins used in the manufacture of the films according to the present invention can be suitably additivated as known in the art in order to improve the properties of the film or the manufacturing process thereof. As an example the resins may contain stabilizers, anti oxidants, pigments, U.V. absorbers, etc.

In particular the outer layers may comprise slip and anti-blocking agents as conventionally used in this field.

The maximum number of layers in the structures according to the present invention will only depend on the equipment available for the manufacture thereof. While up to 10 layers in the overall structure can be easily devised on the basis of the commonly available manufacturing lines, in practice structures with up to 7, 8 or 9 layers will be preferred.

Thermoplastic resins which can suitably be employed in these optional additional layers, besides the oxygen barrier materials already indicated, comprise polyolefins, and in particular heterogeneous ethylene-α-olefin copolymers, homogeneous (Tafmer™-like or single-site) ethylene-α-olefin copolymers, ethylene-vinyl acetate copolymers, ethylene acrylic acid copolymers, ethylene-methacrylic acid copolymers, ethylene-alkyl acrylate copolymers, and the like, including also blends thereof. Also modified polyolefins or blends of said modified polyolefins with other polyolefins can be employed particularly when said additional layers are inner layers, as they will act as tie layers to aid adhesion of adjacent layers of the film.

Said layer (e) will generally comprise a polymer selected from ethylene-vinyl acetate copolymers, ethylene-alkyl acrylate copolymers, ethylene-acrylic or methacrylic acid copolymers either in free acid or ionized form, heterogeneous ethylene-α-olefin copolymers, such as LLDPE or VLDPE, and homogeneous ethylene-α-olefin copolymers.

When an ethylene-vinyl acetate copolymer is used for said outer layer (e), the % by weight of vinyl acetate units is preferably comprised between 9 and 19. Also, said ethylene-vinyl acetate copolymer for the outer layer (e) may have a Melt Index > 1 even if a fractional Melt Index is generally preferred.

In a preferred aspect, layer (e) comprises an ethylene-vinyl acetate copolymer or a heterogeneous or homogeneous ethylene-α-olefin copolymer.

A further preferred embodiment of the present invention provides for a structure containing at least six layers wherein two additional layers are added to the layer sequence (a) to (d) : an inner layer (f) in contact face-to-face with layer (d) and a layer (g), in contact face-to-face with layer (f), as the skin layer.

Said layer (g) will comprise a polymer which may be selected from ethylene-vinyl acetat copolymers, ethylene-alkyl acrylate copolymers, ethylene- acrylic or methacrylic acid copolymers either in free acid or ionized form, heterogeneous ethylene-α-olefin copolymers, such as LLDPE or VLDPE, homogenous ethylene -α-olefin copolymers, polyesters and polyamides.

Said layer (f) may represent a PVDC layer and the skin layer (g) may comprise any of the resins or resin blends indicated above that might be bonded directly to the PVDC layer, such as for instance an ethylene-vinyl acetate copolymer.

A still further preferred embodiment of the present invention comprises a structure containing at least seven layers wherein three additional layers (h), (i) and (j) follow layer (d) in the structure : layer (h) being in contact face-to-face with layer (d), layer (j) being the outer skin layer and layer (i) being an inner layer positioned between layer (h) and layer (j).

In this specific embodiment, layer (j) is defined as layer (g) above, layer (i) is defined as layer (f) above, while layer (h) will comprise a polymer which may suitably be selected from ethylene-vinyl acetate copolymers, ethylene-alkyl acrylate copolymers, ethylene-acrylic or methacrylic acid copolymers either in free acid or in ionized form, heterogeneous ethylene-α-olefin copolymers, such as LLDPE or VLDPE, homogeneous ethylene-α-olefin copolymers, and blends thereof.

Alternatively layer (h) may be PVDC, layer (i) may comprise a resin as defined above which might be bonded directly to the PVDC layer or it may comprise a modified polyolefin to aid adhesion between the PVDC layer and the outer skin layer (j).

Alternatively, the barrier layer of PVDC may represent layer (i) in the overall structure and layer (h) and layer (j) would comprise polymers or polymer blends which may be bonded directly to the PVDC layer.

Still alternatively, layer (h) may comprise an ethylene-vinyl acetate copolymer or, preferably, a modified polyolefin to provide adhesion between layer (d) and layer (i) which will comprise EVOH, polyamide, or a blend of EVOH and polyamide, and layer (j) will comprise an ethylene-vinyl acetate copolymer, an ethylene-alkyl acrylate copolymer or a modified polyolefin.

In a preferred embodiment of the present invention the film is partially or wholly cross-linked. To produce crosslinking, an extrudate is treated with a suitable radiation dosage of high energy electrons, preferably using an electron accelerator, with the dosage level being determined by standard dosimetry methods. Other accelerators such as a Van der Graaf generator or resonating transformer may be used. The radiation is not limited to electrons from an accelerator since any ionizing radiation may be used. Radiation dosages are referred to herein in terms of megarad (MRad). A MRad is 10⁶ Rad with a Rad being the quantity of irradiation that results in the absorption of 100 ergs of energy per gram of irradiated material regardless of the source of radiation. A suitable radiation dosage of high energy electrons is up to about 14 MRad, more preferably in the range of from 2 to 12 and even more preferably in the range of from 4 to 9 MRad.

Irradiation is most preferably performed prior to orientation but it could also be performed after orientation. The overall thickness of the films according to the present invention can vary from about 15 to about 150 µm Preferably however the thickness thereof will be in the range 30 to 130 and more preferably in the range 50 to 110 µm.

The thickness of the heat-sealing layer (a) as well as that of layers (b), (c), and (d) will depend on the overall thickness of the end structure. For the most preferred overall thickness range of from 50 to 110 µm, the thickness of the heat-sealing layer is generally equal to or higher than 6 µm, typically comprised between about 6 and about 30 µm, and preferably between about 8 and about 20 µm and that of layers (b), (c), and (d) is generally higher than 5 µm, preferably higher than 8 µm and even more preferably higher than 10 µm Thinner films will clearly have thinner partial thicknesses of the layers.

The films according to the present invention can be manufactured by the so-called trapped-bubble process, which is a known process typically used for the manufacture of heat-shrinkable films to be used for food contact packaging.

According to said process, the multilayer film is co-extruded through a round die to obtain a tube of molten polymer which is quenched immediately after extrusion without being expanded, optionally cross-linked, then heated to a temperature which is below the melting temperature of at least one of the resins employed, typically by passing it through a hot water bath, and expanded, still at this temperature by internal air pressure to get the transversal orientation and by a differential speed of the pinch rolls which hold the thus obtained "trapped bubble" to provide the longitudinal orientation. The film is then rapidly cooled to somehow freeze the molecules of the film in their oriented state and wound.

Depending on the number of layers in the structure it may be advisable or necessary to split the co-extrusion step : a tube will first be formed of a limited number of layers, with layer (a) on the inside of the tube; this tube will be quenched quickly and before submitting it to the orientation step it will be extrusion-coated with the remaining layers, again quenched quickly, optionally cross-linked, and then passed to the orientation. During the extrusion-coating the tube will be slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first coextrusion step, or this coating step can be repeated as many times as the layers which are to be added.

The extrusion-coating step is clearly required when a film only partially cross-linked is desired such as in the case of barrier structures comprising a PVDC layer which may be damaged by irradiation. In this case the irradiation step will be performed after the first extrusion (which would not comprise the PVDC barrier layer) and before the extrusion-coating.

The film of the present invention may be used either as a film or as a bag to form a package in a conventional manner. In a preferred embodiment the film is obtained as a tubular film and bags are formed by transverse sealing and cutting across the flattened tubular film to make individual bags. Alternatively bags can be made by slitting the tubular film along one edge and then transversely sealing and severing the film to produce bags. Other methods of making bags and packages are known and may be readily adapted to use with the multilayer films of the invention.

A package or bag formed from a film according to the present invention may be used for packaging food and non-food articles. In view of the outstanding mechanical, shrink and optical properties thereof, the films according to the present invention showed to be particularly suitable for packaging frozen meat, poultry, fish or lamb, or fresh products to be frozen.

The properties of the films according to the present invention have been evaluated by submitting the films to the tests indicated below.

Puncture resistance : the puncture resistance is the resistance force arising when pushing a punch against a surface of flexible film. There is not a standard test method to measure this attribute. The test method used in the present evaluations is described briefly herein below : a film sample (6.5 cm x 6.5 cm) is fixed in a specimen holder connected to a compression cell (1-50 kg normal sensitivity) mounted on a dynamometer (an Instron tensile tester); when the dynamometer is started, a punch (a punching sphere, 5-mm in diameter, soldered on a plunger) is brought against the film sample at a constant speed (30 cm/min) and the force needed to puncture the sample is graphically recorded.

In-line abuse resistance : the capability of the tested structures to withstand without breakage the in-line packaging operations, i.e. loading, vacuumizing, sealing, shrinking, and collecting the products through an idle roll conveyor, is defined as "in-line abuse resistance". Scope of this test is to provide a method to discriminate and rank bags of different structure at a laboratory level as to this aspect. The procedure to test this property is therefore devised so as to simulate as much as possible the most drastic conditions which might actually occur in the packaging lines. To perform this test, the bags to be examined are filled with plastic blocks covered by net, vacuumized, sealed and shrunk on an industrial packaging line. The thus obtained packages are then checked for leakers and the in-line abuse resistance is evaluated by the % of rejects. Due to the harsh conditions purposely employed this number is typically high but, as indicated above, this test has not an absolute but only a relative meaning and its aim is to indicate whether a given structure is expected to have more or less abuse resistance of a standard bag used as comparison, when used at the customer plant.

Abuse resistance during shipping : this term defines the capability of a material to withstand without breakage the stresses which occur during the transportation of packed products. As for the in-line abuse resistance this test is aimed at discriminating and ranking bags under this aspect at a laboratory level. Therefore the operations that occur at customer level are reproduced under extremely severe conditions. To perform this test the bags to be examined are loaded with rubber blocks covered by net, vacuumized, sealed and shrunk, then placed into cartons and tested on a shipping simulator under standard conditions. Then the packages are checked for leakers and the abuse resistance during shipping is evaluated by the % of rejects. In the present case, since the films according to the present invention are particularly suitable for frozen food applications, the packages have been frozen before placing them into cartons.

% Unrestrained linear shrinkage : the percent free shrink, i.e. the irreversible and rapid reduction, as a percent, of the original dimensions of a sample subjected to a given temperature under conditions where nil restraint to inhibit shrinkage is present, has been measured according to ASTM D2732, by immersing for 4 seconds specimens of the structures to be tested (100 mm x 100 mm) into a bath of hot water (90°C). This attribute has been measured in the longitudinal direction (LS) as well as in the transversal direction (TS).

Haze : haze is defined as that percentage of transmitted light which in passing through the specimen deviates from the incident beam by forward scattering, and it has been measured by ASTM D 1003 (Procedure A).

Gloss : the specular gloss of the films, i.e. the relative luminous reflectance factor of a specimen in the mirror direction has been measured using ASTM 2457 - 90 with a gloss angle of 60°.

The present invention will now be described in more detail with particular reference to the following Examples :

The following examples 10, 14 and 16 are illustrations of the present invention. Examples 1-9, 11-13, 15, 17-21 do not fall in the scope of claim 1.

### Example 1

A four layer structure is prepared by coextrusion of
- a heat sealable layer (a) of a heterogeneous ethylene-octene copolymer with d = 0.911 g/cm³ and Melt Index of 6 g/10 min (Stamylex 08-076-DSM);
- an inner layer (b), in face-to face contact with the heat-sealing layer (a), of an ethylene-vinyl acetate copolymer with 13.0 % by weight of vinyl acetate units and Melt Index of 0.25 g/10 min (Escorene Ultra UL 00014-EXXON);
- an inner layer (c), in face-to face contact with inner layer (b), of an ethylene-methacrylic acid copolymer with 12 % by weight of methacrylic acid and Melt Index of 1.5 g/10 min (Nucrel 1202 HC - DuPont); and
- an outer layer (d) in face-to-face contact with inner layer (c), of an ethylene-vinyl acetate copolymer with 13.0 % by weight of vinyl acetate units and Melt Index of 0.25 g/10 min (Escorene Ultra UL 00014 - EXXON).

The extruded tubular film is cooled quickly and collapsed.

This 4-layer structure is irradiated by high energy electrons at a dosage of 6.0 MRad to provide crosslinking and oriented biaxially in both machine (MD) and transverse (TD) directions by a factor of about 3 (TD) and about 3.5 (MD) by feeding it through a hot water bath (85-90°C), inflating it to get the transversal orientation and stretching it to get the longitudinal orientation. The film is then rapidly cooled and rolled up for further processing.

The thickness of the layers in the final 4-layer structure is as follows :
Heat-sealable layer (a) : 10 µm
Inner layer (b): 21 µm
Inner layer (c) : 21 µm
Outer layer (d) : 21 µm.

### Example 2

A 7-layer structure is prepared by coextrusion of the above 4-layer tube, irradiation at a dosage of 4.5 MRad, and extrusion-coating, on top of layer (d) with - from the inside to the outside -:
- an inner layer (h), in face-to face contact with inner layer (d), of an ethylene-vinyl acetate copolymer with 13.5 % by weight of vinyl acetate units and Melt Index of 0.35 g/10 min (Evatane 1003 VN4 - Elf Atochem);
- an inner layer (i), in face-to face contact with layer (h), of a heterogeneous ethylene-octene copolymer with d = 9.02 g/cm³ and Melt Index of 3.0 g/10 min (Teamex 1000F - DSM); and
- an outer layer (j), in face-to face contact with layer (i), of an ethylene-vinyl acetate copolymer with 13.5 % by weight of vinyl acetate units and Melt Index of 0.35 g/10 min (Evatane 1003 VN4 - Elf Atochem).

The tube is then rapidly cooled and oriented as indicated in Example 1.

The thickness of the different lavers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Inner layer (h) | 8.2 µm |
| Inner layer (i) | 10.3 µm |
| Outer layer (j) | 8.2 µm. |

### Example 3

A 7-layer structure is prepared by coextrusion of the 4-layer tube described in Example 1, irradiation at a dosage of 6.0 MRad, and extrusion-coating, on top of layer (d) with :
- an inner layer (h) of an ethylene-vinyl acetate copolymer with 13.5 % by weight of vinyl acetate units and Melt Index of 0.35 g/10 min (Evatane 1003 VN4 - Elf Atochem);
- an inner layer (i) of an ionomer (ethylene-methacrylic copolymer wherein the neutralizing cation is sodium, having a density of 0.940 g/cm³ and Melt Index of 1.3 g/10 min) (Surlyn 1601 - DuPont); and
- an outer layer (j) of an ethylene-vinyl acetate copolymer with 13.5 % by weight of vinyl acetate units and Melt Index of 0.35 g/10 min (Evatane 1003 VN4 - Elf Atochem).

The tube is then rapidly cooled and oriented as indicated in Example 1.

The thickness of the different layers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Inner layer (h) | 8.2 µm |
| Inner layer (i) | 10.3 µm |
| Outer layer (j) | 8.2 µm. |

### Example 4

A 7-layer structure is prepared by coextrusion of the 4-layer tube described in Example 1, irradiation at a dosage of 4.5 MRad, and extrusion-coating, on top of layer (d) with :
- an inner layer (h) of an ethylene-vinyl acetate copolymer with 9 % by weight of vinyl acetate units and Melt Index of 3.0 g/10 min (Evatane 1020 VN3-Elf Atochem);
- an inner layer (i) of an ionomer; (ethylene-methacrylic copolymer wherein the neutralizing cation is sodium, having a density of 0.940 g/cm³ and Melt Index of 1.3 g/10 min) (Surlyn 1601 - DuPont); and
- an outer layer (j) of an ethylene-vinyl acetate copolymer with 9 % by weight of vinyl acetate units and Melt Index of 3.0 g/10 min (Evatane 1020 VN3-Elf Atochem).

The tube is then rapidly cooled and oriented as indicated in Example 1.

The thickness of the different layers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Inner layer (h) | 8.2 µm |
| Inner layer (i) | 10.3 µm |
| Outer layer (j) | 8.2 µ.m. |

### Example 5

A 7-layer structure is prepared by coextrusion of
- a heat sealable layer (a) of a homogeneous ethylene-octene copolymer with d = 0.902 g/cm³ and Melt Index of 3 g/10 min (Affinity FW 1650-Dow);
- an inner layer (b) of an ethylene-vinyl acetate copolymer with 13.0 % by weight of vinyl acetate units and Melt Index of 0.25 g/10 min (Escorene Ultra UL 00014 - EXXON);
- an inner layer (c) of an ethylene-methacrylic acid copolymer with 12 % by weight of methacrylic acid and Melt Index of 1.5 g/10 min (Nucrel 1202 HC-DuPont); and
- a layer (d) of an ethylene-vinyl acetate copolymer with 13.0 % by weight of vinyl acetate units and Melt Index of 0.25 g/10 min (Escorene Ultra UL 00014 - EXXON).

The extruded tubular film is cooled quickly and collapsed.

This structure is then irradiated by high energy electrons at a dosage of 4.5 MRad to provide crosslinking and then extrusion-coated, on top of layer (d) above, with the following layers :
- an inner layer (h) of an ethylene-vinyl acetate copolymer with 13.5 % by weight of vinyl acetate units and Melt Index of 0.35 g/10 min (Evatane 1003 VN4 - Elf Atochem);
- an inner layer (i) of an ethylene-methacrylic acid copolymer with 12 % by weight of methacrylic acid and Melt Index of 1.5 g/10 min (Nucrel 1202 HC-DuPont); and
- an outer layer (j) of an ethylene-vinyl acetate copolymer with 13.5 % by weight of vinyl acetate units and Melt Index of 0.35 g/10 min (Evatane 1003 VN4 - Elf Atochem).

The film is oriented biaxially in both machine (MD) and transverse (TD) directions by a factor of about 3 (TD) and about 3.5 (MD) by feeding it through a hot water bath (85-90°C), inflating it to get the transversal orientation and stretching it to get the longitudinal orientation. The film is then rapidly cooled and rolled up for further processing.

The thickness of the layers in the final 7-layer structure is as follows :

| | |
|---|---|
| Heat-sealable layer (a) | 9.6 µm |
| Inner layer (b) | 11.5 µm |
| Inner layer (c) | 12.5 µm |
| Inner layer (d) | 11.5 µm |
| Inner layer (h) | 7.6 µm |
| Inner layer (i) | 9.6 µm |
| Outer layer (j) | 7.6 µm. |

### Example 6

A 7-layer structure is obtained by following the same procedure as in Example 3 but avoiding the irradiation step.

### Example 7

A 7-layer structure is obtained by following the same procedure as in Example 3 but irradiating the substrate (a) to (d) to a dosage of 4.5 MRad instead of 6.

### Example 8

A 7-layer structure is obtained by following the same procedure as in Example 3 but irradiating the substrate (a) to (d) to a dosage of 7.5 MRad instead of 6.

### Example 9

A 7-layer structure is prepared by coextrusion of the 4-layer tube described in Example 1, irradiation at a dosage of 6.0 MRad, and extrusion-coating, on top of layer (d) with :
- an inner layer (h) of an ethylene-vinyl acetate copolymer with 9 % by weight of vinyl acetate units and Melt Index of 3.0 g/10 min (Evatane 1020 VN3-Elf Atochem);
- an inner layer (i) of an ionomer (ethylene-methacrylic copolymer wherein the neutralizing cation is sodium, having a density of 0.940 g/cm³ and Melt Index of 1.3 g/10 min (Surlyn 1601 - Du Pont); and
- an outer layer (j) of an ethylene-vinyl acetate copolymer with 9 % by weight of vinyl acetate units and Melt Index of 3.0 g/10 min (Evatane 1020 VN3-Elf Atochem).

The tube is then rapidly cooled and oriented as indicated in Example 1.

The thickness of the different layers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Inner layer (h) | 8.2 µm |
| Inner layer (i) | 10.3 µm |
| Outer layer (j) | 8.2 µm. |

### Example 10

A 7-layer structure is prepared by coextrusion of the 4-layer tube described in Example 1, irradiation at a dosage of 6.0 MRad, and extrusion-coating, on top of layer (d) with :
- a barrier layer (h) of PVDC;
- an inner layer (i) of a heterogeneous ethylene-octene copolymer with d = 0.902 g/cm³ and Melt Index of 3.0 g/10 min (Teamex 1000F - DSM); and
- an outer layer (j) of an ethylene-vinyl acetate copolymer with 9 % by weight of vinyl acetate units and Melt Index of 3.0 g/10 min (Evatane 1020 VN3-Elf Atochem).

The tube is then rapidly cooled and oriented as indicated in Example 1.

The thickness of the different layers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Barrier layer (h) | 5.0 µm |
| Inner layer (i) | 10.3 µm |
| Outer layer (j) | 8.2 µ.m |

### Example 11

A 7-layer structure is obtained by following the same procedure as in Example 5 but using for the heat-sealing layer (a) a homogeneous ethylene-octene copolymer with d = 0.895 g/cm³ and Melt Index of 1.6 g/10 min (Affinity PF 140-Dow).

### Example 12

A 7-layer structure is prepared by coextrusion of the 4-layer tube described in Example 1, irradiation at a dosage of 4.5 MRad, and extrusion-coating, on top of layer (d) with :
- an inner layer (h) of an ethylene-vinyl acetate copolymer with 13.5 % by weight of vinyl acetate units and Melt Index of 0.35 g/10 min (Evatane 1003 VN4 - Elf Atochem);
- an inner layer (i) of an ethylene-methacrylic acid copolymer with 12 % by weight of methacrylic acid and Melt Index of 1.5 g/10 min (Nucrel 1202 HC-DuPont); and
- an outer layer (j) of an ethylene-vinyl acetate copolymer with 13.5 % by weight of vinyl acetate units and Melt Index of 0.35 g/10 min (Evatane 1003 VN4 - Elf Atochem).

The film is oriented biaxially in both machine (MD) and transverse (TD) directions by a factor of about 3 (TD) and about 3.5 (MD) by feeding it through a hot water bath (85-90°C), inflating it to get the transversal orientation and stretching it to get the longitudinal orientation. The film is then rapidly cooled and rolled up for further processing.

The thickness of the layers in the final 7-layer structure is as follows :

| | |
|---|---|
| Heat-sealable layer (a) | 9.6 µm |
| Inner layer (b) | 11.5 µm |
| Inner layer (c) | 12.5 µm |
| Inner layer (d) | 11.5 µm |
| Inner layer (h) | 15.3 µm |
| Inner layer (i) | 6.7 µm |
| Outer layer (j) | 2.9 µm. |

### Example 13

A 7-layer structure is prepared by coextrusion of the 4-layer tube described in Example 1, irradiation at a dosage of 4.5 MRad, and extrusion-coating, on top of layer (d) with :
- an inner layer (h) of an ethylene-vinyl acetate copolymer with 13.5 % by weight of vinyl acetate units and Melt Index of 0.35 g/10 min (Evatane 1003 VN4 - Elf Atochem);
- an inner layer (i) of an ethylene-methacrylic acid copolymer with 12 % by weight of methacrylic acid and Melt Index of 1.5 g/10 min (Nucrel 1202 HC-DuPont); and
- an outer layer (j) of an ethylene-vinyl acetate copolymer with 9 % by weight of vinyl acetate units (Evatane 1020 VG3 - Elf Atochem).

The film is oriented biaxially in both machine (MD) and transverse (TD) directions by a factor of about 3 (TD) and about 3.5 (MD) by feeding it through a hot water bath (85-90°C), inflating it to get the transversal orientation and stretching it to get the longitudinal orientation. The film is then rapidly cooled and rolled up for further processing.

The thickness of the layers in the final 7-layer structure is as follows :

| | |
|---|---|
| Heat-sealable layer (a) | 9.6 µm |
| Inner layer (b) | 11.5 µm |
| Inner layer (c) | 12.5 µm |
| Inner layer (d) | 11.5 µm |
| Inner layer (h) | 12.4 µm |
| Inner layer (i) | 10.0 µm |
| Outer layer (j) | 2.9 µm. |

### Example 14

A 9-layer structure is prepared by coextrusion of the 4-layer tube described in Example 1, irradiation at a dosage of 4.5 MRad, and extrusion-coating, on top of layer (d) with - in sequence from the inside to the outside -:
- an inner layer (k) of an ethylene-vinyl acetate copolymer with 9 % by weight of vinyl acetate units and Melt Index of 3.0 g/10 min (Evatane 1020 VN3-Elf Atochem)
- an inner layer (I) of an ethylene-based adhesive (Bynel CXA 3062-DuPont);
- an inner layer (m) of a terpolyamide (Grilon XE 3534 - EMS);
- an inner layer (n) of an ethylene-based adhesive (Bynel CXA 3062-DuPont) and
- an outer layer (o) of an ethylene-vinyl acetate copolymer with 9 % by weight of vinyl acetate units and Melt Index of 3.0 g/10 min (Evatane 1020 VN3-Elf Atochem).

The film is oriented biaxially in both machine (MD) and transverse (TD) directions by a factor of about 3 (TD) and about 3.5 (MD) by feeding it through a hot water bath (85-90°C), inflating it to get the transversal orientation and stretching it to get the longitudinal orientation. The film is then rapidly cooled and rolled up for further processing.

The thickness of the layers in the final 9-layer structure is as follows :

| | |
|---|---|
| Heat-sealable layer (a) | 10 µm |
| Inner layer (b) | 6 µm |
| Inner layer (c) | 5 µm |
| Inner layer (d) | 6 µm |
| Inner layer (k) | 4 µm |
| Inner layer (I) | 4 µm |
| Inner layer (m) | 10 µm |
| Inner layer (n) | 4 µm |
| Outer layer (o) | 4 µm. |

### Example 15

A 7-layer structure is prepared by coextrusion of
- a heat selable layer (a) of a heterogeneous ethylene-octene copolymer with d = 0.911 g/cm³ and Melt Index of 6 g/10 min (Stamylex 08-076-DSM);
- an inner layer (b) of an ethylene-vinyl acetate copolymer with 13.0 % by weight of vinyl acetate units and Melt Index of 0.25 g/10 min (Escorene Ultra UL 00014 - EXXON);
- an inner layer (c) of a homogeneous (single-site) ethylene-octene copolymer with d = 0.908 g/cm³ and Melt Index of 1.0 g/10 min (Affinity PF 1840-Dow); and
- a layer (d) of an ethylene-vinyl acetate copolymer with 13.0 % by weight of vinyl acetate units and Melt Index of 0.25 g/10 min (Escorene Ultra UL 00014 - EXXON).

The extruded tubular film is cooled quickly and collapsed.

This structure is then irradiated by high energy electrons at a dosage of 4.5 MRad to provide crosslinking and then extrusion-coated, on top of layer (d) above, with the following layers :
- an inner layer (h) of an ethylene-vinyl acetate copolymer with 13.5 % by weight of vinyl acetate units and Melt Index of 0.35 g/10 min (Evatane 1003 VN4 - Elf Atochem);
- an inner layer (i) of an ionomer; (ethylene-methacrylic copolymer wherein the neutralizing cation is sodium, having a density of 0.940 g/cm³ and Melt Index of 1.3 g/10 min) (Surlyn 1601 - Du Pont); and
- an outer layer (j) of an ethylene-vinyl acetate copolymer with 13.5 % by weight of vinyl acetate units and Melt Index of 0.35 g/10 min (Evatane 1003 VN4 - Elf Atochem)

The film is oriented biaxially in both machine (MD) and transverse (TD) directions by a factor of about 3 (TD) and about 3.5 (MD) by feeding it thorugh a hot water bath (85-90°C), inflating it to get the transversal orientation and stretching it to get the longitudinal orientation. The film is then rapidly cooled and rolled up for further processing.

The thickness of the layers in the final 7-layer structure is as follows :

| | |
|---|---|
| Heat-selable layer (a) | 10.3 µm |
| Inner layer (b) | 12.3 µm |
| Inner layer (c) | 13.4 µm |
| Inner layer (d) | 12.3 µm |
| Inner layer (h) | 8.2 µm |
| Inner layer (i) | 10.3 µm |
| Outer layer (j) | 8.2 µm. |

### Example 16

A 9-layer structure is prepared by coextrusion of the 4-layer tube described in Example 1, irradiation at a dosage of 3.5 MRad, and extrusion-coating, on top of layer (d) with - from the inside to the outside -:
- an inner layer (k) of an ethylene-vinyl acetate copolymer with 9 % by weight of vinyl acetate units and Melt Index of 3.0 g/10 min (Evatane 1020 VN3-Elf Atochem)
- an inner layer (I) of an ethylene-based adhesive (Admer NF 530-Mitsui);
- an inner layer (m) of an ethylene-vinyl alchool copolymer with an ethylene content of 44% by mole (EVAL EP-E105A - Marubeni);
- an inner layer (n) of an ethylene-based adhesive (Admer NF 530-Mitsui) and
- an outer layer (o) of an ethylene-vinyl acetate copolymer with 9 % by weight of vinyl acetate units and Melt Index of 3.0 g/10 min (Evatane 1020 VN3-Elf Atochem).

The film is oriented biaxially in both machine (MD) and transverse (TD) directions by feeding it through a hot water bath (90-93°C), inflating it to get the transversal orientation and stretching it to get the longitudinal orientation. The film is then rapidly cooled and rolled up for further processing.

The thickness of the layers in the final 9-layer structure is as follows :

| | |
|---|---|
| Heat-sealable layer (a) | 10 µm |
| Inner layer (b) | 6 µm |
| Inner layer (c) | 5 µm |
| Inner layer (d) | 6 µm |
| Inner layer (k) | 6 µm |
| Inner layer (I) | 4 µm |
| Inner layer (m) | 5 µm |
| Inner layer (n) | 4 µm |
| Outer layer (o) | 6 µm. |

### Example 17

A 7-layer structure is obtained by following the same procedure as in Example 2 but replacing the ethylene-vinyl acetate of layers (b) and (d) with an ethylene-butyl acrylate copolymer with 18.5 % by weight of butyl acrylate units and Melt Index of 0.35 g/10 min (EA 719-009 - Quantum USI).

### Example 18

A 7-layer structure is obtained by following the same procedure as in Example 2 but replacing the ethylene-vinyl acetate of layers (b) and (d) with an ethylene-methyl acrylate copolymer with 24 % by weight of methyl acrylate units and Melt Index of 0.4-0.6 g/10 min (Lotryl 24MA005 - Elf Atochem).

### Example 19

A 7-layer structure is obtained by following the same procedure as in Example 2 but replacing the ethylene-vinyl acetate of layer (b) with an ethylene-butyl acrylate copolymer with 18.5 % by weight of butyl acrylate units and Melt Index of 0.35 g/10 min (EA 719-009 - Quantum USI).

### Example 20

A 6-layer structure is prepared by coextrusion of the 4-layer tube of Example 1, irradiation at a dosage of 4.5 MRad, and extrusion-coating, on top of layer (d) with :
- an inner layer (f) of an ethylene-vinyl acetate copolymer with 13.5 % by weight of vinyl acetate units and Melt Index of 0.35 g/10 min (Evatane 1003 VN4 - Elf Atochem), and
- an outer layer (g) of a heterogeneous ethylene-octene copolymer with d = 0.911 g/cm³ and Melt Index of 6 g/10 min (Stamylex 08-076 - DSM).

The tube is then rapidly cooled and oriented as indicated in Example 1.

The thickness of the different layers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Inner layer (f) | 14.3 µm |
| Outer layer (g) | 10.3 µm. |

### Example 21

A 5-layer structure is prepared by coextrusion of the 4-layer tube of Example 1, irradiation at a dosage of 4.5 MRad, and extrusion-coating, on top of layer (d) with :
- an outer layer (e) of a homogeneous ethylene-octene copolymer with d = 0.902 g/cm³ and Melt Index of 3.0 g/10 min (Affinity FW 1650 - Dow)

The tube is then rapidly cooled and oriented as indicated in Example 1.

The thickness of the different layers is as follows :

| | |
|---|---|
| Heat-sealable layer (a) | 10.3 µm |
| Inner layer (b) | 12.3 µm |
| Inner layer (c) | 13.4 µm |
| Inner layer (d) | 12.3 µm |
| Outer layer (e) | 25.3 µm. |

The properties (% Shrink, Haze, Gloss, Puncture resistance, In-line abuse resistance) of some representative structures of the present invention are reported in Table I.

In the same Table for comparative purposes the results obtained with a mono-layer, 80 µm thick, film of ionomer (actually marketed by Trigon as TRIGON™ TN for frozen food packaging and considered as the leading product on this market) are also reported under the heading "Comp. A".

The bags used for the in-line abuse resistance tests were 165 mm x 280 mm end sealed bags.

**TABLE I**

| | Structure of Example no. | | | | | | | | Comp. A |
|---|---|---|---|---|---|---|---|---|---|
| | 1 | 2 | 3 | 5 | 6 | 7 | 8 | 12 | |
| % Shrink | | | | | | | | | |
| LS | ND | 53 | 54 | 43 | ND | ND | ND | 43 | 56 |
| TS | ND | 60 | 61 | 54 | ND | ND | ND | 55 | 55 |
| Haze | ND | 4.5 | 4.6 | 4.0 | ND | ND | ND | 5.7 | 7.2 |
| Gloss | ND | 111 | 113 | 112 | ND | ND | ND | 104 | 103 |

| Puncture (kg) | | | | | | | | | |
|---|---|---|---|---|---|---|---|---|---|
| 30°C | 14.8 | 9.9 | 11.1 | 9.4 | 8.8 | 9.4 | 12.0 | 11.1 | 6.8 |
| 90°C | 1.4 | 1.0 | 1.0 | 1.1 | 0.3 | 0.6 | 1.0 | 1.0 | 0.2 |

| In-line abuse | | | | | | | | | |
|---|---|---|---|---|---|---|---|---|---|
| % Rejects | 74 | 78 | 65 | 65 | 63 | ND | 72 | 59 | 96 |
| ND = not determined | | | | | | | | | |

In following Table II the Abuse resistance during shipping of the structure of Example 3 in comparison with the bag indicated as "Comp. A" is reported :

**TABLE II**

| | Structure of Example 3 | Comp. A |
|---|---|---|
| Abuse resistance during shipping % Rejects | 71 | 85 |

## Claims

1. A multi-layer heat-shrinkable film comprising
- a heat-sealable layer (a)
- an inner layer (b) comprising a polymer selected from the group consisting of ethylene-vinyl acetate copolymers containing from 4 to 28 % by weight of vinyl acetate units and with a Melt Index lower than 1 g/10 min, and ethylene-alkyl acrylate copolymers containing from 9 to 28 % by weight of alkyl acrylate units and with a Melt Index lower than 1 g/10 min,
- an inner layer (c), face-to-face in contact with layer (b), comprising a polymer selected from the group consisting of ethylene-acrylic acid copolymers, ethylene-methacrylic acid copolymers, ethylene-vinyl acetate copolymers, ethylene-alkyl acrylate copolymers, heterogeneous ethylene-α-olefin copolymers and homogeneous ethylene-α-olefin copolymers, and
- a layer (d) comprising a polymer selected from the group consisting of ethylene-vinyl acetate copolymers containing from 4 to 28 % by weight of vinyl acetate units and with a Melt Index lower than 1 g/10 min, and ethylene-alkyl acrylate copolymers containing from 9 to 28 % by weight of alkyl acrylate units and with a Melt Index lower than 1 g/10 min, face-to-face in contact with the side of layer (c) which is not in contact with layer (b), wherein
- the composition of layer (c) is different from that of layer (b) and (d),
- the ratios by weight between layer (b) and layer (c), and between layer (d) and layer (c) are comprised between 0.125 and 8, and
- additional layers including, as an inner layer, an oxygen-barrier layer follow layer (d) in the structure sequence.

2. The multi-layer heat-shrinkable film of claim 1 wherein the inner layers (b) and (d), each independently, comprise an ethylene-vinyl acetate copolymer containing from 4 to 28 % by weight of vinyl acetate units and having a Melt Index lower than 1 g/10 min.

3. The multi-layer heat-shrinkable film of claim 2 wherein the inner layers (b) and (d), each independently, comprise an ethylene-vinyl acetate copolymer containing from 9 to 19 % by weight of vinyl acetate units and having a Melt Index lower than 1 g/10 min; and the inner layer (c) comprises a polymer selected from ethylene-acrylic acid copolymers and ethylene-methacrylic acid copolymers.

4. The multi-layer heat-shrinkable film of any of preceding claims 1 to 3 wherein the heat-sealable layer (a) comprises a polymer selected from the group consisting of heterogeneous ethylene-α-olefin copolymers, homogeneous ethylene-α-olefin copolymers, ethylene-propylene copolymers, ethylene-propylene-butene copolymers, and copolymers of ethylene and acrylic or methacrylic acids including ionomers.

5. The multi-layer heat-shrinkable film of claim 4 wherein the heat-sealable layer (a) comprises a polymer selected from VLDPE and single-site or metallocene ethylene-α-olefin copolymers.

6. The multi-layer heat-shrinkable film of any of preceding claims 1 to 5 wherein the ratios by weight between layers (b) and (c) and between layers (d) and (c) are in the range 0.25 to 4.

7. The multi-layer heat-shrinkable film of claim 6 wherein said ratios are in the range 0.5 to 2.

8. The multi-layer heat-shrinkable film of any of preceding claims 1 to 7 wherein the ethylene-vinyl acetate copolymer of layer (b) and/or layer (d) has a Melt Index < 0.5 g/10 min, and preferably ≤ 0.35 g/10 min.

9. The multi-layer heat-shrinkable film of any of preceding claims 1 to 8 wherein layer (c) comprises an ethylene-acrylic acid or ethylene-methacrylic acid copolymer containing at least 8 % by weight and preferably from 10 to 14 % by weight of acrylic or methacrylic acid units.

10. The multi-layer heat-shrinkable film of any of preceding claims 1 to 9 wherein the film is partially or wholly irradiated with an inozing radiation at a dosage of up to about 14 MRad, preferably in the range of from 2 to 12 and more preferably in the range of from 4 to 9 MRad.

11. The multi-layer heat-shrinkable film of any of preceding claims 1 to 10 wherein the heat-sealable layer (a) is in contact face-to-face with layer (b).

12. The multi-layer heat-shrinkable film of any of preceding claims 1 to 11 wherein the oxygen-barrier layer is of PVDC, EVOH, PVOH, polyamide.

13. The multi-layer heat-shrinkable film of any of preceding claims 1 to 12 wherein a layer (f) is in contact with layer (d) and an additional outer layer (g) is in contact with said layer (f) to provide for a structure containing at least six layers wherein layer (f) is PVDC and layer (g) comprises an ethylene-vinyl acetate copolymer.

14. The multi-layer heat-shrinkable film of any of preceding claims 1 to 12 wherein an additional layer (h) is in contact face-to-face with layer (d), an additional layer (j) is the outer skin layer and an additional layer (i) is positioned between layer (h) and layer (j) to provide for a structure containing at least seven layers, wherein layer (j) comprises a polymer which is selected from ethylene-vinyl acetate copolymers, ethylene-alkyl acrylate copolymers, ethylene-acrylic or methacrylic acid copolymers either in free acid or ionized form, homogeneous and heterogeneous ethylene-α-olefin copolymers, polyesters and polyamides, layer (i) comprises a polymer selected from ethylene-vinyl acetate copolymers and homogeneous and heterogeneous ethylene-α-olefin copolymers, and layer (h) comprises PVDC.

15. The multi-layer heat-shrinkable film of any of preceding claims 1 to 12 wherein an additional layer (h) is in contact face-to-face with layer (d), an additional layer (j) is the outer skin layer and an additional layer (i) is positioned between layer (h) and layer (j) to provide for a structure containing at least seven layers, wherein layer (j) comprises a polymer which is selected from ethylene-vinyl acetate copolymers, ethylene-alkyl acrylate copolymers, and modified polyolefins, layer (i) comprises a polymer selected from EVOH, polyamides, and blends thereof and layer (h) comprises an ethylene-vinyl acetate copolymer or a modified polyolefin.

16. A film according to claims 1 or 12 wherein an additional layer (h) is in contact face-to-face with layer (d), an additional layer (j) is the outer skin layer and an additional layer (i) is positioned between layer (h) and layer (j) to provide for a structure' containing at least seven layers, wherein layer (j) comprises a polymer which is selected from ethylene-vinyl acetate copolymers, ethylene-alkyl acrylate copolymers, ethylene-acrylic or methacrylic acid copolymers either in free acid or ionized form, heterogeneous and homogeneous ethylene-α-olefin copolymers, polyesters and polyamides, layer (i) comprises a polymer selected from ethylene-vinyl acetate copolymers, ethylene-alkyl acrylate copolymers, ethylene-acrylic or methacrylic acid copolymers either in free acid or ionized form, heterogeneous and homogeneous ethylene-α-olefin copolymers, and, when the outer layer (j) comprises a co-polyester or a polyamide, preferably a modified polyolefin, and layer (h) comprises a polymer selected from ethylene-vinyl acetate copolymers, ethylene-acrylic or methacrylic acid copolymers either in free acid or in ionized form, and heterogeneous and homogeneous ethylene-α-olefin copolymers.

17. A film according to claim 16 wherein layer (h) comprises an ethylene-vinyl acetate copolymer, layer (i) comprises a polymer selected from an ethylene-acrylic or methacrylic acid copolymers either in free acid or ionized form, and heterogeneous and homogenous ethylene-α-olefin copolymers, and layer (j) comprises an ethylene-vinyl acetate copolymer.

18. A film according to claim 17 wherein the ethylene-vinyl acetate copolymer of layers (h) and/or (j) contains an amount of vinyl acetate units of from 9 to 19 % by weight, preferably of from 11 to 15 % and more preferably of from 12 and 14 %.

19. A film according to claim 17 or 18 wherein the ethylene-vinyl acetate copolymer of layers (h) or/and (j) has a Melt Index < 0.5 and preferably < 0.35.

20. A film according to claims 1 or 12 wherein an additional layer (h) is in contact face-to-face with layer (d), an additional layer (j) is the outer skin layer and an additional layer (i) is positioned between layer (h) and layer (j) to provide for a structure containing at least seven layers, wherein layer (j) comprises a polymer which is selected from ethylene-vinyl acetate copolymers, ethylene-alkyl acrylate copolymers, ethylene-acrylic or methacrylic acid copolymers either in free acid or ionized form, homogeneous and heterogeneous ethylene-α-olefin copolymers, polyesters and polyamides, layer (i) comprises a polymer selected from ethylene-vinyl acetate copolymers and heterogeneous or homogeneous ethylene-α-olefin copolymers, and layer (h) comprises PVDC.

21. A film according to claim 20 wherein the ethylene-vinyl acetate copolymer of layers (i) or/and (j) has a Melt Index < 0.5 and preferably ≤ 0.35.

## Patentansprüche

1. Wärmeschrumpfbarer Mehrschichtfilm, umfassend:
- eine heißsiegelbare Schicht (a)
- eine Innenschicht (b), umfassend ein Polymer, ausgewählt aus der Gruppe, bestehend aus Ethylen-Vinylacetat-Copolymeren, enthaltend 4 bis 28 Gew.% Vinylacetat-Einheiten, mit einem Schmelzindex von wenigedr als 1 g/10 min und aus Ethylen-Alkylacrylat-Copolymeren, enthaltend 9 bis 28 Gew.% Alkylacrylat-Einheiten, mit einem Schmelzindex von weniger als 1 g/10 min,
- eine Innenschicht (c), Fläche-zu-Fläche in Kontakt mit Schicht (b), umfassend ein Polymer, ausgewählt aus der Gruppe, bestehend aus Ethylen-Acrylsäure-Copolymeren, Ethylen-Methacrylsäure-Copolymeren, Ethylen-Vinylacetat-Copolymeren, Ethylen-Alkylacrylat-Copolymeren, heterogenen Ethylen-α-Olefin-Copolymeren und aus homogenen Ethylen-α-Olefin-Copolymeren, und
- eine Schicht (d), umfassend ein Polymer, ausgewählt aus der Gruppe, bestehend aus Ethylen-Vinylacetat-Copolymeren, enthaltend 4 bis 28 Gew.% Vinylacetat-Einheiten, mit einem Schmelzindex von weniger als 1 g/10 min und aus Ethylen-Acrylat-Copolymeren, enthaltend 9 bis 28 Gew.% Alkylacrylat-Einheiten, mit einem Schmelzindex von weniger als 1 g/10 min, Fläche-zu-Fläche in Kontakt mit der Seite von Schicht (c), die nicht in Kontakt mit Schicht (b) vorliegt,
worin
- sich die Zusammensetzung der Schicht (c) von derjenigen der Schicht (b) und (d) unterscheidet,
- die Gewichtsverhältnisse von Schicht (b) zu Schicht (c) und von Schicht (d) zu Schicht (c) 0,125 bis 8 betragen, und worin
- zusätzliche Schichten vorliegen, die, als eine Innenschicht, eine Sauerstof-Sperrschicht einschließen, welche auf Schicht (d) in der Strukturabfolge folgen.

2. Wärmeschrumpfbarer Mehrschichtfilm gemäß Anspruch 1, worin die Innenschichten (b) und (d), jeweils unabhängig, ein Ethylen-Vinylacetat-Copolymer umfassen enthaltend 4 bis 28 Gew.% Vinylacetat-Einheiten, mit einem Schmelzindex von weniger als 1 g/10 min.

3. Wärmeschrumpfbarer Mehrschichtfilm gemäß Anspruch 2, worin die Innenschichten (b) und (d), jeweils unabhängig, ein Ethylen-Vinylacetat-Copolymer umfassen, enthaltend 9 bis 19 Gew.% Vinylacetat-Einheiten, mit einem Schmelzindex von 1 g/10 min, und worin die Innenschicht (c) ein Polymer umfasst, ausgewählt aus Ethylen-Acrylsäure-Copolymeren und aus Ethylen-Methacrylsäure-Copolymeren.

4. Wärmeschrumpfbarer Mehrschichtfilm gemäß einem der vorhergehenden Ansprüche 1 bis 3, worin die heißsiegelbare Schicht (a) ein Polymer umfasst, ausgewählt aus der Gruppe, bestehend aus heterogenen Ethylen-α-Olefin-Copolymeren, homogenen Ethylen-α-Olefin-Copolymeren, Ethylen-Propylen-Copolymeren, Ethylen-Propylen-Buten-Copolymeren und aus Copolymeren aus Ethylen und Acryl- oder Methacrylsäure, einschließlich von Ionomeren.

5. Wärmeschrumpfbarer Mehrschichtfilm gemäß Anspruch 4, worin die heißsiegelbare Schicht (a) ein Polymer umfasst, ausgewählt aus VLDPE und aus Einzel-Stellen- oder Metallocen-Ethylen-α-Olefin-Copolymeren.

6. Wärmeschrumpfbarer Mehrschichtfilm gemäß einem der Ansprüche 1 bis 5, worin die Gewichtsverhältnisse zwischen den Schichten (b) und (c) und zwischen den Schichten (d) und (c) im Bereich von 0,25 bis 4 liegen.

7. Wärmeschrumpfbarer Mehrschichtfilm gemäß Anspruch 6, worin die genannten Gewichtsverhältnisse 0,5 bis 2 betragen.

8. Wärmeschrumpfbarer Mehrschichtfilm gemäß einem der Ansprüche 1 bis 7, worin das Ethylen-Vinylacetat-Copolymer der Schicht (b) und/oder der Schicht (d) einen Schmelzindex < 0,5 und vorzugsweise ≤ 0,35 g/10 min aufweist.

9. Wärmeschrumpfbarer Mehrschichtfilm gemäß einem der Ansprüche 1 bis 8, worin Schicht (c) ein Ethylen-Acrylsäure- oder ein Ethylen-Methacrylsäure-Copolymer umfasst, das mindestens 8 und vorzugsweise 10 bis 14 Gew.% Acryl- oder Methacrylsäure-Einheiten enthält.

10. Wärmeschrumpfbarer Mehrschichtfilm gemäß einem der Ansprüche 1 bis 9, worin der Film mit einer ionisierenden Strahlung mit einer Dosierung bis zu ca. 14, vorzugsweise 2 bis 12 und noch bevorzugter von 4 bis 9 MRad teilweise oder vollständig bestrahlt wird.

11. Wärmeschrumpfbarer Mehrschichtfilm gemäß einem der vorhergehenden Ansprüche 1 bis 10, worin die heißsiegelbare Schicht (a) in einem Fläche-zu-Fläche-Kontakt mit Schicht (b) vorliegt.

12. Wärmeschrumpfbarer Mehrschichtfilm gemäß einem der Ansprüche 1 bis 11, worin die Sauerstoff-Barriereschicht aus PVDC, EVOH, PVOH, Polyamid ist.

13. Wärmeschrumpfbarer Mehrschichtfilm gemäß einem der Ansprüche 1 bis 12, worin die Schicht (f) in Kontakt mit Schicht (d) und eine zusätzliche Aussenschicht (g) in Kontakt mit genannter Schicht (f) vorliegen, um eine Struktur zu ergeben, die mindestens 6 Schichten enthält, worin Schicht (f) aus PVDC ist und Schicht (g) ein Ethylen-Vinylacetat-Copolymer umfasst.

14. Wärmeschrumpfbarer Mehrschichtfilm gemäß einem der Ansprüche 1 bis 12, worin eine zusätzliche Schicht (a) in Fläche-zu-Fläche-Kontakt mit Schicht (d) vorliegt, eine zusätzliche Schicht (j) die Aussenhautschicht ist und eine zusätzliche Schicht (i) zwischen Schicht (h) und Schicht (j) angeordnet ist, um eine Struktur zu ergeben, die mindestens 7 Schichten enthält, worin Schicht (j) ein Polymer, das aus Ethylen-Vinylacetat-Copolymeren, Ethylen-Alkylacrylat-Copolymeren, Ethylen-Acryl- oder -Methacrylsäure-Copolymeren entweder in freier Säure- oder ionisierter Form, homogenen und heterogenen Ethylen-α-Olefin-Copolymeren, Polyestern und aus Polyamiden ausgewählt ist, Schicht (i) ein Polymer, ausgewählt aus Ethylen-Vinylactat-Copolymeren und aus homogenen und heterogenen Ethylen-α-Olefin-Copolymeren, und Schicht (h) PVDC umfassen.

15. Wärmeschrumpfbarer Mehrschichtfilm gemäß einem der vorhergehenden Ansprüche 1 bis 12, worin eine zusätzliche Schicht (h) in Fläche-zu-Fläche-Kontakt mit Schicht (d) vorliegt, eine zusätzliche Schicht (j) die Aussenhautschicht ist und eine zusätzliche Schicht (i) zwischen Schicht (h) und Schicht (j) angeordnet ist, um eine Struktur zu ergeben, die mindestens 7 Schichten enthält, worin Schicht (j) ein Polymer, das aus Ethylen-Vinylacetat-Copolymeren, Ethylen-Alkylacrylat-Copolymeren und aus modifizierten Polyolefinen ausgewählt ist, Schicht (i) ein Polymer, ausgewählt aus EVOH, Polyamiden und aus Mischungen daraus, und Schicht (h) ein Ethylen-Vinylacetat-Copolymer oder ein modifiziertes Polyolefin umfassen.

16. Film gemäß Anspruch 1 oder 12, worin eine zusätzliche Schicht (h) in einem Fläche-zu-Fläsche-Kontakt mit Schicht (d) vorliegt, eine zusätzliche Schicht (j) die Aussenhautschicht ist und eine zusätzliche Schicht (i)zwischen Schicht (h) und (j) angeordnet ist, um eine Struktur zu ergeben, die mindestens 7 Schichten aufweist, worin Schicht (j) ein Polymer, das aus Ethylen-Vinylacetat-Copolymeren, Ethylen-Alkylacrylat-Copolymeren, Ethylen-Acryl- oder -Methacrylsäure-Copolymeren entweder in freier Säure- oder ionisierter Form, heterogenen und homogenen α-Olefin-Copolymeren, Polyestern und aus Polyamiden ausgewählt ist, Schicht (i) ein Polymer, ausgewählt aus Ethylen-Vinylacetat-Copolymeren, Ethylen-Alkylacrylat-Copolymeren, Ethylen-Acryl- oder -Methacrylsäure-Copolymeren entweder in freier Säure- oder ionisierter Form, heterogenen und aus homogenen Ethylen-α-olefin-Copolymeren, und, wenn die Aussenschicht (j) einen Co-Polyester oder ein Polyamid umfasst, vorzugsweise ausgewählt aus einem modifizierten Polyolefin, und Schicht (a) ein Polymer umfassen, ausgewählt aus Ethylen-Vinyalacetat-Copolymeren, Ethylen-Acryl- oder - Methacrylsäure-Copolymeren entweder in freier Säure- oder in ionisierter Form und aus heterogenen und homogenen Ethylen-α -Olefin-Copolymeren.

17. Film gemäß Anspruch 16, worin Schicht (h) ein Ethylen-Vinylacetat-Copolymer, Schicht (i) ein Polymer, ausgewählt aus Ethylen-Acryl- oder -Methacrylsäure-Copolymeren entweder in freier Säure- oder ionisierter Form und aus heterogenen und homogenen Ethylen-α-Olefin-Copolymeren, und Schicht (j) ein Ethylen-Vinylacetat-Copolymer umfassen.

18. Film gemäß Anspruch 17, worin das Ethylen-Vinylacetat-Copolymer der Schichten (h) und/oder (j) eine Menge der Vinylacetat-Einheiten von 9 bis 19, vorzugsweise von 11 bis 15 und noch bevorzugter von 12 bis 14 Gew.% enthält.

19. Film gemäß Anspruch 17 oder 18, worin das Ethylen-Vinylacetat-Copolymer der Schichten (h) oder/und (j) einen Schmelzindex < 0,5 und vorzugsweise ≤ 0,35 aufweist.

20. Film gemäß Anspruch 1 oder 12, worin eine zusätzliche Schicht (h) in Fläche-zu-Fläche-Kontakt mit Schicht (d) vorliegt, eine zusätzliche Schicht (j) die Aussenhautschicht ist und eine zusätzliche Schicht (i) zwischen Schicht (h) und (j) angeordnet ist, um eine Struktur zu ergeben, die mindestens 7 Schichten enthält, worin Schicht (j) ein Polymer, das aus Ethylen-Vinylacetat-Copolymeren, Ethylen-Alkylacrylat-Copolymeren, Ethylen-Acryl- oder - Methacrylsäure-Copolymeren entweder in freier Säure- oder ionisierter Form, homogenen und heterogenen Ethylen-α-Olefin-Copolymeren, Polyestern und aus Polyamiden, Schicht (i) ein Polymer, ausgewählt aus Ethylen-Vinylacetat-Copolymeren und aus heterogenen oder homogenen Ethylen-α-Olefin-Copolymeren, und Schicht (h) PVDC umfassen.

21. Film gemäß Anspruch 20, worin das Ethylen-Vinylacetat-Copolymer der Schichten (i) oder/und (j) einen Schmelzindex < 0,5 und vorzugsweise ≤ 0,35 aufweist.

## Revendications

1. Film thermorétractable multicouche comprenant
- une couche thermosoudable (a),
- une couche interne (b) comprenant un polymère choisi parmi des copolymères d'éthylène-acétate de vinyle contenant de 4 à 28 % en poids d'unités acétate de vinyle et avec un indice de fusion inférieur à 1 g/10 min, et des copolymères d'éthylène-acrylate d'alkyle contenant de 9 à 28 % en poids d'unités acrylate d'alkyle et avec un indice de fusion inférieur à 1 g/10 min,
- une couche interne (c), face à face en contact avec la couche (b), comprenant un polymère choisi parmi des copolymères d'éthylène-acide acrylique, des copolymères d'éthylène-acide méthacrylique, des copolymères d'éthylène-acétate de vinyle, des copolymères d'éthylène-acrylate d'alkyle, des copolymères hétérogènes d'éthylène-oléfine-α et des copolymères homogènes d'éthylène-oléfine-α,
et
- une couche (d) comprenant un polymère choisi parmi des copolymères d'éthylène-acétate de vinyle contenant de 4 à 28 % en poids d'unités acétate de vinyle et avec un indice de fusion inférieur à 1 g/10 min, et des copolymères d'éthylène-acrylate d'alkyle contenant de 9 à 28 % en poids d'unités acrylate d'alkyle et avec un indice de fusion inférieur à 1 g/10 min, face à face en contact avec le côté de la couche (c) qui n'est pas en contact avec la couche (b), dans lequel
- la composition de la couche (c) est différente de celle de la couche (b) et de la couche (d),
- les rapports en poids entre la couche (b) et la couche (c), et entre la couche (d) et la couche (c) sont compris entre 0,125 et 8, et
- des couches supplémentaires comprenant, comme couche interne, une couche de barrière à l'oxygène suivent la couche (d) dans la succession de la structure.

2. Film thermorétractable multicouche selon la revendication 1, dans lequel les couches internes (b) et (d) comprennent chacune indépendamment un copolymère d'éthylène-acétate de vinyle contenant de 4 à 28 % en poids d'unités acétate de vinyle et ayant un indice de fusion inférieur à 1 g/10 min.

3. Film thermorétractable multicouche selon la revendication 2, dans lequel les couches internes (b) et (d) comprennent chacune indépendamment un copolymère d'éthylène-acétate de vinyle contenant de 9 à 19 % en poids d'unités acétate de vinyle et ayant un indice de fusion inférieur à 1 g/10 min ; et la couche interne (c) comprend un polymère choisi parmi des copolymères d'éthylène-acide acrylique et des copolymères d'éthylène-acide méthacrylique.

4. Film thermorétractable multicouche selon l'une quelconque des revendications précédentes 1 à 3, dans lequel la couche thermosoudable (a) comprend un polymère choisi parmi des copolymères hétérogènes d'éthylène-oléfine-α, des copolymères homogènes d'éthylène-oléfine-α, des copolymères d'éthylène-propylène, des copolymères d'éthylène-propylène-butène et des copolymères d'éthylène et d'acide acrylique ou méthacrylique comprenant des ionomères.

5. Film thermorétractable multicouche selon la revendication 4, dans lequel la couche thermosoudable (a) comprend un polymère choisi parmi VLDPE et des copolymères d'éthylène-oléfine-α à site unique ou à métallocène.

6. Film thermorétractable multicouche selon l'une quelconque des revendications précédentes 1 à 5, dans lequel les rapports en poids entre les couches (b) et (c) et entre les couches (d) et (c) se trouvent dans l'intervalle de 0,25 à 4.

7. Film thermorétractable multicouche selon la revendication 6, dans lequel lesdits rapports se trouvent dans l'intervalle de 0,5 à 2.

8. Film thermorétractable multicouche selon l'une quelconque des revendications précédentes 1 à 7, dans lequel le copolymère d'éthylène-acétate de vinyle de la couche (b) et/ou de la couche (d) présente un indice de fusion < 0,5 g/10 min et de préférence ≤ 0,35 g/10 min.

9. Film thermorétractable multicouche selon l'une quelconque des revendications précédentes 1 à 8, dans lequel la couche (c) comprend un copolymère d'éthylène-acide acrylique ou d'éthylène-acide méthacrylique, contenant au moins 8 % en poids et de préférence de 10 à 14 % en poids d'unités d'acide acrylique ou méthacrylique.

10. Film thermorétractable multicouche selon l'une quelconque des revendications précédentes 1 à 9, dans lequel le film est partiellement ou totalement irradié avec un rayonnement ionisant à un dosage allant jusqu'à environ 14 MRad, de préférence dans l'intervalle de 2 à 12 et encore mieux dans l'intervalle de 4 à 9 MRad.

11. Film thermorétractable multicouche selon l'une quelconque des revendications précédentes 1 à 10, dans lequel la couche thermosoudable (a) est en contact face à face avec la couche (b).

12. Film thermorétractable multicouche selon l'une quelconque des revendications précédentes 1 à 11, dans lequel la couche de barrière à l'oxygène est constituée de PVDC, d'EVOH, de PVOH, de polyamide.

13. Film thermorétractable multicouche selon l'une quelconque des revendications précédentes 1 à 12, dans lequel une couche (f) est en contact avec la couche (d) et une couche externe supplémentaire (g) est en contact avec ladite couche (f) pour fournir une structure contenant au moins six couches dans laquelle la couche (f) est en PVDC et la couche (g) comprend un copolymère d'éthylène-acétate de vinyle.

14. Film thermorétractable multicouche selon l'une quelconque des revendications précédentes 1 à 12, dans lequel une couche supplémentaire (h) est en contact face à face avec la couche (d), une couche supplémentaire (j) est la couche de peau externe et une couche supplémentaire (i) est disposée entre la couche (h) et la couche (j) pour fournir une structure contenant au moins sept couches, dans laquelle la couche (j) comprend un polymère qui est choisi parmi des copolymères d'éthylène-acétate de vinyle, des copolymères d'éthylène-acrylate d'alkyle, des copolymères d'éthylène-acide acrylique ou méthacrylique soit dans une forme d'acide libre, soit ionisée, des copolymères homogènes et hétérogènes d'éthylène-oléfine-α, des polyesters et des polyamides, la couche (i) comprend un polymère choisi parmi des copolymères d'éthylène-acétate de vinyle et des copolymères homogènes et hétérogènes d'éthylène-oléfine-α, et la couche (h) comprend du PVDC.

15. Film thermorétractable multicouche selon l'une quelconque des revendications précédentes 1 à 12, dans lequel une couche supplémentaire (h) est en contact face à face avec la couche (d), une couche supplémentaire (j) est la couche de peau externe et une couche supplémentaire (i) est disposée entre la couche (h) et la couche (j) pour fournir une structure contenant au moins sept couches, dans laquelle la couche (j) comprend un polymère qui est choisi parmi des copolymères d'éthylène-acétate de vinyle, des copolymères d'éthylène-acrylate d'alkyle et des polyoléfines modifiées, la couche (i) comprend un polymère choisi parmi EVOH, des polyamides et des mélanges de ceux-ci et la couche (h) comprend un copolymère d'éthylène-acétate de vinyle ou une polyoléfine modifiée.

16. Film selon la revendication 1 ou 12, dans lequel une couche supplémentaire (h) est en contact face à face avec la couche (d), une couche supplémentaire (j) est la couche de peau externe et une couche supplémentaire (i) est disposée entre la couche (h) et la couche (j) pour fournir une structure contenant au moins sept couches, dans laquelle la couche (j) comprend un polymère qui est choisi parmi des copolymères d'éthylène-acétate de vinyle, des copolymères d'éthylène-acrylate d'alkyle, des copolymères d'éthylène-acide acrylique ou méthacrylique, soit dans une forme d'acide libre, soit ionisée, des copolymères hétérogènes et homogènes d'éthylène-oléfine-α, des polyesters et des polyamides, la couche (i) comprend un polymère choisi parmi des copolymères d'éthylène-acétate de vinyle, des copolymères d'éthylène-acrylate d'alkyle, des copolymères d'éthylène-acide acrylique ou méthacrylique, soit dans une forme d'acide libre, soit ionisée, des copolymères hétérogènes et homogènes d'éthylène-oléfine-α et lorsque la couche externe (j) comprend un co-polyester ou un polyamide, de préférence une polyoléfine modifiée, et la couche (h) comprend un polymère choisi parmi des copolymères d'éthylène-acétate de vinyle, des copolymères d'éthylène-acide acrylique ou méthacrylique soit dans une forme d'acide libre, soit ionisée et des copolymères hétérogènes et homogènes d'éthylène-oléfine-α.

17. Film selon la revendication 16, dans lequel la couche (h) comprend un copolymère d'éthylène-acétate de vinyle, la couche (i) comprend un polymère choisi parmi des copolymères d'éthylène-acide acrylique ou méthacrylique soit dans une forme d'acide libre, soit ionisée, et des copolymères hétérogènes et homogènes d'éthylène-oléfine-α, et la couche (j) comprend un copolymère d'éthylène-acétate de vinyle.

18. Film selon la revendication 17, dans lequel le copolymère d'éthylène-acétate de vinyle des couches (h) et/ou (j) contient une quantité d'unités acétate de vinyle comprise entre 9 et 19 % en poids, de préférence entre 11 et 15 % et encore mieux entre 12 et 14 %.

19. Film selon la revendication 17 ou 18, dans lequel le copolymère d'éthylène-acétate de vinyle des couches (h) ou/et (j) présente un indice de fusion < 0,5 et de préférence ≤0,35.

20. Film selon la revendication 1 ou 12, dans lequel une couche supplémentaire (h) est en contact face à face avec la couche (d), une couche supplémentaire (j) est la couche de peau externe et une couche supplémentaire (i) est disposée entre la couche (h) et la couche (j) pour fournir une structure contenant au moins sept couches, dans laquelle la couche (j) comprend un polymère qui est choisi parmi des copolymères d'éthylène-acétate de vinyle, des copolymères d'éthylène-acrylate d'alkyle, des copolymères d'éthylène-acide acrylique ou méthacrylique soit dans une forme d'acide libre, soit ionisée, des copolymères homogènes et hétérogènes d'éthylène-oléfine-α, des polyesters et des polyamides, la couche (i) comprend un polymère choisi parmi des copolymères d'éthylène-acétate de vinyle et des copolymères hétérogènes ou homogènes d'éthylène-oléfine-α et la couche (h) comprend du PVDC.

21. Film selon la revendication 20, dans lequel le copolymère d'éthylène-acétate de vinyle des couches (i) ou/et (j) présente un indice de fusion < 0,5 et de préférence ≤0,35.
